# EUROPEAN PATENT APPLICATION

(11) **EP 4 725 874 A1**
(43) Date of publication of application: **15.04.2026**
(21) Application number: 24020311.7
(22) Date of filing: 10.10.2024
(51) Int. Cl.: B65G 21/02, B65G 13/11, B65G 39/12

(54) **PROFILE SYSTEM FOR THE CONSTRUCTION OF SINGLE-STORY AND MULTI-STORY CONVEYOR STRUCTURES**

(30) Priority: 09.10.2024 BG 11397424
(71) Applicant: "Logisoft" EOOD, 1700 Sofia (BG)
(72) Inventor: PAVLOV, Krum Konstantinov, 1616 Sofia (BG)
(74) Representative: Varbanov, Julian Ivanov

(57) **Abstract**

The invention relates to a profile system of closed and open extruded aluminum profiles for quick and easy construction of single and multi-store conveyor structures and eliminates the need for expensive fasteners. The system includes open aluminum profile "leg" (1), closed rectangular profile "crossbar" (2), a basic closed conveyor profile (3) and a sequence of motorized rollers (4) and passive rollers (5) mounted to the conveyor profile (3). The system provides stability, ease and flexibility during installation and adaptation in different operating conditions.

## Description

### Field of Technology

The present invention relates to a profile system for constructing single-level and multi-level conveyor structures used in various industries-from manufacturing lines to courier and online retail centers. The invention offers a new system for the rapid, stable, and cost-effective construction of conveyor structures.

### State of the art

Various conveyor systems are known, categorized as steel, aluminum, and hybrid. Steel systems are heavy and difficult to assemble, aluminum systems are expensive, and hybrid systems are primarily suitable for single-level structures.

US5672345 describes a conveyor system based on steel profiles that provide stability and strength. A major drawback of the system is its heaviness and difficulty in assembly, which limits flexibility in constructing complex and multi-level structures. Furthermore, the high weight leads to increased transportation costs and requires stronger motors.

EP2341234 discloses an aluminum conveyor system with a complex network of connecting elements. Although the use of aluminum reduces weight, the complexity and high cost of specialized connecting elements significantly increase the final cost of the system and the assembly time.

In hybrid systems, such as described in WO2019123456, there is a combined approach with aluminum profiles and steel legs. While this design combines the advantages of lightness and stability, it is primarily limited to single-level structures. Multi-level systems become significantly heavier and more expensive to implement, limiting their practical application.

The technical solution according to the present invention overcomes these drawbacks by providing a system of closed and open extruded aluminum profiles that combine the advantages of low weight, easy assembly, and stability for constructing both single-level and multi-level structures.

### Technical Essence of the Invention

The system according to the invention consists of:
1. Profile "leg" 1, which is an open aluminum profile with two M8 threaded holes and a groove for attaching the "crossbar" profiles 2, with the connection to the crossbars 2 being made via bolts. Profile "leg" 1 is arranged vertically and serves as the base for the entire structure.
2. Profile "crossbar" 2, which is a closed rectangular profile with the same width as the groove of profile "leg" 1. The crossbar profile 2 has two holes for connection to profile "leg" 1. The crossbars 2 reinforce the structure regardless of the open type of vertical profiles 1.
3. Conveyor profile 3, which is the main closed profile upon which the entire conveyor mechanism is built. Profile 3 connects to profile "leg" 1 via a single bolt or nut, eliminating the need for special connecting elements. The conveyor profile 3 also has holes for mounting motor and passive rollers.
4. A sequence of motor rollers 4 and passive rollers 5, placed in multiple separate transport zones, where each transport zone includes at least one motor roller 4 that drives the zone and multiple passive rollers 5 located before and after the motor roller 4 in the specific zone. The movement between transport zones is transferred via belts between the motor and passive rollers, with the motor roller 4 connected to the preceding and the following passive roller 5 in the sequence through two belts, and each subsequent passive roller 5 transferring movement via one belt, with the belt between the individual transport zones being removed. This method ensures smooth transfer of loads between transport zones in ZPA (Zero Pressured Accumulation) conveyor systems at a synchronized speed across all individual transport zones.

### Examples of Implementation of the Invention

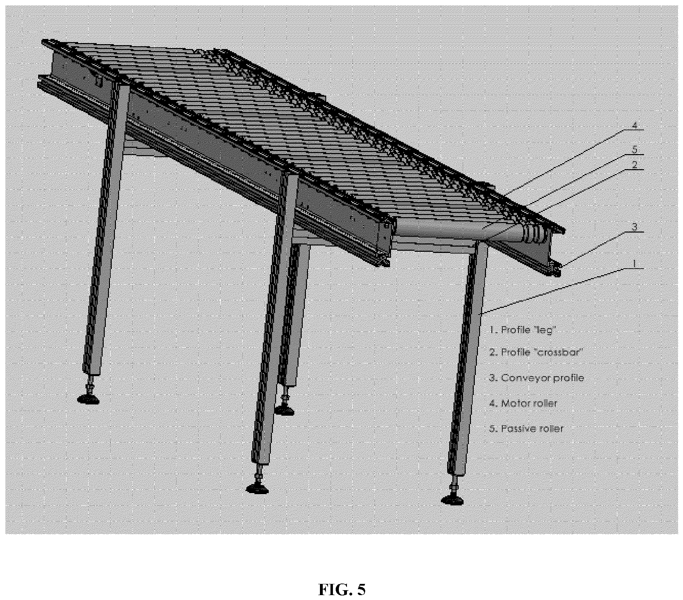

According to one exemplary embodiment, the system is used to construct a single-level structure (Fig. 5). The "leg" profiles 1 are arranged vertically and connected to the "crossbar" profiles 2 via M8 bolts through the holes in profile "leg" 1. The conveyor profile 3 is secured to profile "leg" 1 via a single bolt. The connection does not require complex connecting elements, reducing installation time and component costs, while the stability of the structure is achieved through the crossbars 2. The motor rollers 4 and passive rollers 5 are mounted to the conveyor profile 3 via holes, with the connection method being: - through a round hole in conveyor profile 3 and screws that secure at the ends of rollers 4 and 5, ensuring a more stable but slower installation; or - through a hexagonal hole in conveyor profile 3 and hexagonal shafts located at both ends of rollers 4 and 5, allowing quick and easy placement of rollers 4 and 5 between conveyor profiles 3. Motor rollers 4 and passive rollers 5 are placed in separate transport zones. Each zone includes at least one motor roller 4 that drives the zone and multiple passive rollers 5 located before and after the motor roller 4 in the specific zone. The movement between the transport zones is transferred via belts between motor and passive rollers 4 and 5. The motor roller 4 is connected to the preceding and the following passive roller 5 in the sequence through two belts. Each subsequent passive roller 5 transfers movement via one belt. There is no belt between the individual transport zones. The number of motor and passive rollers in a given zone depends on their diameter and the length of the zone, as well as the distance between them. Typically, the rollers have a diameter of 50 mm, and the pitch from roller to roller ranges between 60 mm and 100 mm. The diameters of the belts connecting the rollers vary depending on their pitch. The length of one zone varies and can be, for example, 750 mm, 825 mm, etc. This length is determined by customers and the load they wish to transport. The width is typically 450 mm, 650 mm, 800 mm, 1000 mm, etc.

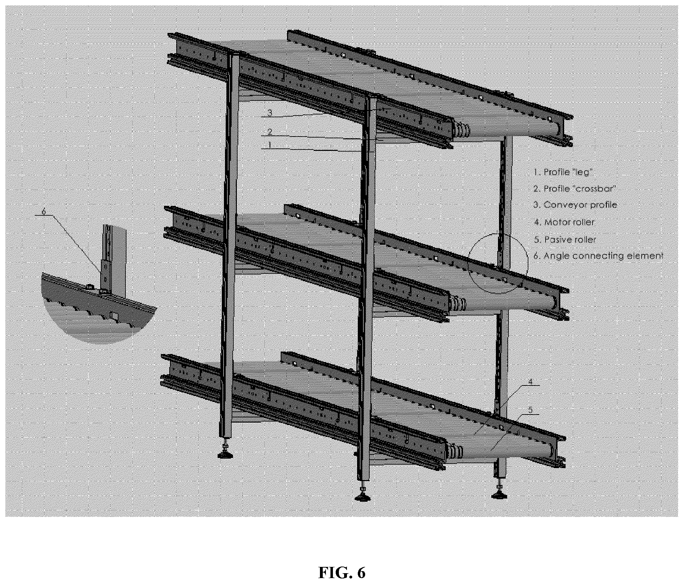

According to another exemplary embodiment, the system is used to construct a multi-level conveyor system (Fig. 6). For constructing the multi-level structure, an open profile "leg" 1, a closed rectangular profile "crossbar" 2, and a main closed conveyor profile 3 are used, with the crossbars 2 connected to each of the "leg" profiles 1 via bolts, thereby reinforcing the structure. The conveyor profiles 3 are placed on top of each other at different levels horizontally and secured to the legs 1 using an angular connecting element 6. The installation and positioning of the motor rollers 4 and passive rollers 5 to the conveyor profile 3 is done as previously described. The multi-level configuration allows for the construction of multilayer lines, providing optimal space utilization.

According to another exemplary embodiment, the system is used to construct a system with integration of additional elements. In this embodiment, the "leg" profiles 1 allow for the addition of steel plates with nut-bolts for height adjustment of the system. This allows easy adaptation of the conveyor system to different mounting surfaces using adjustable steps.

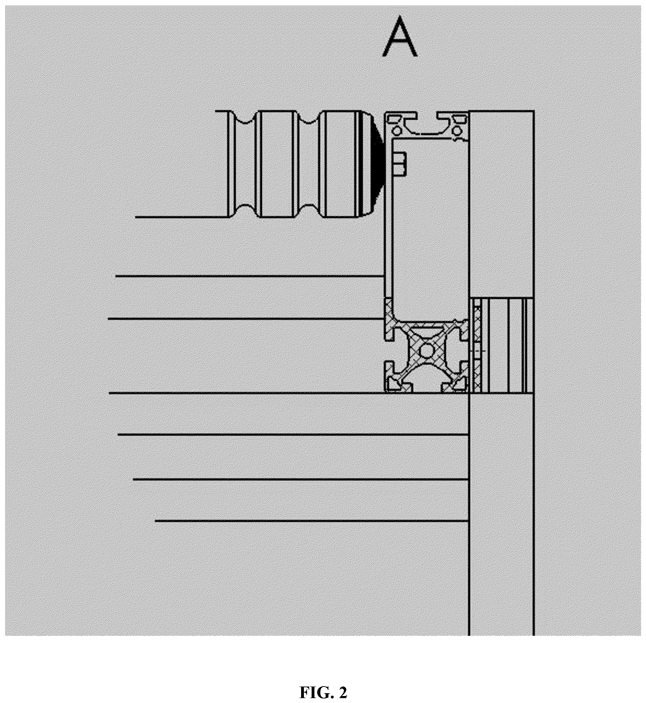

In another exemplary embodiment, according to Fig. 2, the installation of the conveyor profile 3 is presented. The conveyor profile 3 is connected to the leg 1 via a single bolt, ensuring the security and stability of the connection. This solution eliminates the need for additional connecting elements while providing strength and easy installation.

### Description of the Accompanying Figures

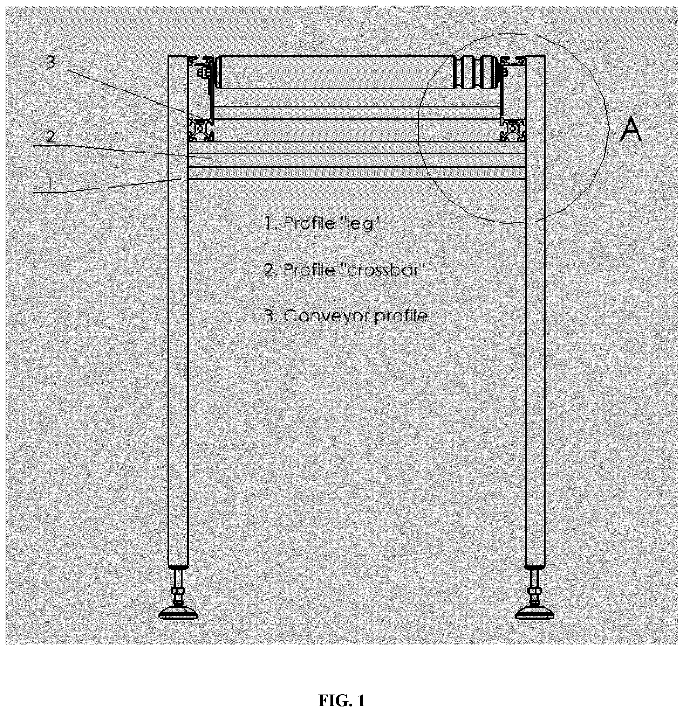

Fig. 1 - 2D view of a single-level structure
Fig. 2 - Installation of the motor and passive frames to conveyor profile 3 in a single-level structure, which profile 3 is connected with one bolt or nut to leg 1

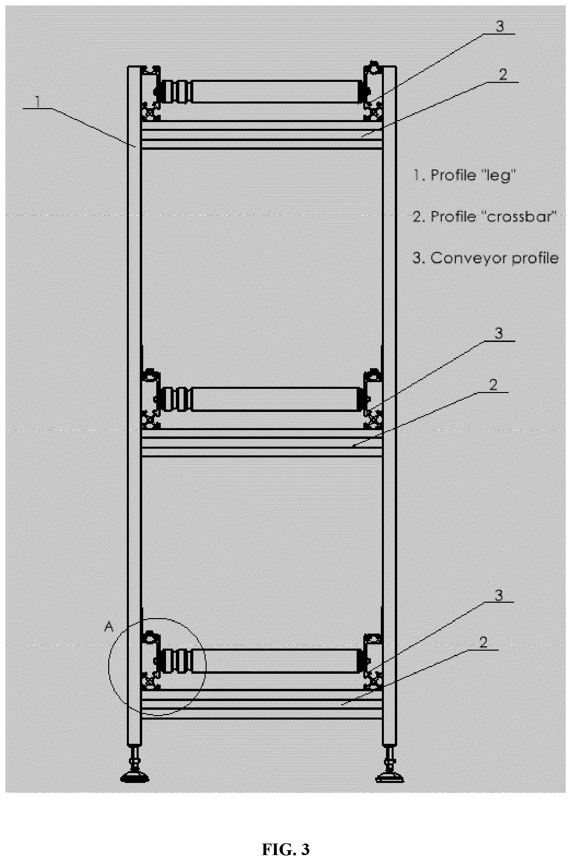

Fig. 3 - 2D view of a multi-level structure

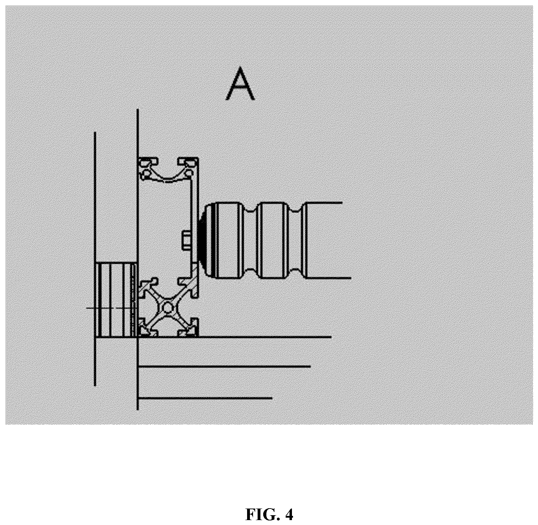

Fig. 4 - Installation of the motor and passive frames to conveyor profile 3 in a multi-level structure, which profile 3 is connected with one bolt or nut to leg 1
Fig. 5 - 3D view of a single-level structure
Fig. 6 - 3D view of a multi-level structure
Fig. 7 - 2D view of an open profile leg 1
Fig. 8 - Closed rectangular profile crossbar 2
Fig. 9 - Closed conveyor profile 3

### Advantages of the Invention

The present invention provides:
- Construction of conveyor structures at competitive prices and reduced overall mass of the structure through the use of less aluminum.
- Easy and quick assembly that does not require complex connecting elements.
- The possibility of quickly constructing multi-level structures without additional weight on the structure.
- An efficient design that allows easy reconstruction, relocation, modification, and expansion of existing systems.
- Stability suitable for both single-level and multi-level structures.
- Absence of vibrations, which extends the lifespan of the motor rollers.

## Claims

1. A profile system for constructing single-level and multi-level conveyor structures, **characterized by** a combination of closed and open extruded aluminum profiles, consisting of:
∘ an open aluminum profile "leg" (1), vertically positioned as the base of the structure, which has two M8 threaded holes and a groove for attaching closed rectangular profiles "crossbar" (2) using bolts;
∘ a closed rectangular profile "crossbar" (2) with two connection holes to the "leg" profile (1), where the width of the "crossbar" profile (2) is the same as the width of the groove in the "leg" profile (1);
∘ a main closed conveyor profile (3), connected to the "leg" profile (1) via one bolt or nut and with openings for mounting of drive rollers (4) and passive rollers (5);
∘ a sequence of drive rollers (4) and passive rollers (5) placed in multiple separate transport zones, where each transport zone includes at least one drive roller (4) and multiple passive rollers (5) positioned before and after the drive roller (4) in the specific transport zone, such that belts are placed between the drive rollers (4) and passive rollers (5), allowing for smooth movement between individual transport zones at synchronized speed, where the drive roller (4) is connected to the previous passive roller (5) in the sequence and to the next passive roller (5) in the sequence via two belts, while each subsequent passive roller (5) is connected via one belt, which is removed between individual transport zones.

2. The profile system according to claim 1, **characterized in that** the drive rollers (4) and passive rollers (5) are connected to the conveyor profile (3) via a circular hole in the conveyor profile (3) and screws secured at both ends of the rollers (4, 5).

3. The profile system according to claim 1, **characterized in that** hexagonal shafts are placed at both ends of the drive rollers (4) and passive rollers (5), allowing for connection with the conveyor profile (3) via a hexagonal hole in the profile (3).

4. The profile system according to claim 1, **characterized in that** in a multi-level conveyor system, the conveyor profiles (3) are positioned one above the other at different levels in the horizontal direction and are secured to the "leg" profiles (1) via a connecting element (6).
